# EUROPEAN PATENT APPLICATION

(11) **EP 0 960 569 A2**
(43) Date of publication of application: **01.12.1999**
(21) Application number: 99109767.6
(22) Date of filing: 18.05.1999
(51) Int. Cl.: A23L 1/10, A23P 1/10

(54) **Boiled rice-shaping apparatus**

(30) Priority: 22.05.1998 JP 14164598
(71) Applicant: Chiba and Associates, Tokyo 151-0053 (JP)
(72) Inventor: Ono, Hiroshi, Hachioji-shi, Tokyo 193-0802 (JP)
(74) Representative: Klunker . Schmitt-Nilson . Hirsch

(57) **Abstract**

A mold frame (26) of a boiled rice-shaping apparatus (10) is installed to a chamber-forming member (18), and vinegared rice (96) is charged in a chamber (92) which is formed by a bottom section (36), end surface sections (38a, 38b), and side surface sections (88a, 88b). The mold frame (26) is removed, and a handle (58) is grasped so that a first rotatable plate (20) is rotated in a direction of the arrow A, and a second rotatable plate (22) is rotated in a direction of the arrow B. Thus, the vinegared rice (96) is pressed and compressed in a widthwise direction. Further, a lid member (80) is displaced in a direction to make approach to the bottom section (36). Thus, the vinegared rice (96) is pressed and compressed in a vertical direction to be shaped to have a predetermined shape. Accordingly, neither sophisticated technique nor experience of a production operator is required to lump and shape the vinegared rice (96), there is no difference in quality depending on the production operator, the installation space of the boiled rice-shaping apparatus (10) is decreased as small as possible, and it is easy to maintain and manage the apparatus.

## Description

### BACKGROUND OF THE INVENTION

### Field of the Invention:

The present invention relates to a boiled rice-shaping apparatus which makes it possible to shape boiled rice to have a predetermined shape and a size with ease, for example, when hand-shaped sushi or shaped sushi (nigirizushi) and rice ball (omusubi) are produced.

### Description of the Related Art:

Conventionally, when boiled rice is lumped and hardened to produce, for example, shaped sushi and rice ball, a predetermined amount of boiled rice is shaped or formed with hands, or boiled rice is charged in a mold formed with a wood frame or the like. For example, when shaped sushi is produced, a predetermined amount of vinegared rice (sushimeshi) is placed on hand. The vinegared rice is shaped and hardened to have a substantially rectangular shape to produce a so-called vinegared rice cake (sharidama). A seafood topping (neta) such as tuna is optionally placed on the vinegared rice cake to be eaten.

Some sushi shops and take-out food shops are provided with an automatic boiled rice-shaping apparatus suitable for mass production.

However, in the case of the former conventional technique, a sophisticated technique and experience are required to uniformly produce a desired shaped sushi with good appearance. The quality of the shaped sushi differs depending on a cook, and the operation efficiency is not so good.

On the other hand, in the case of the latter conventional technique, a large space is required to install the apparatus. It is complicated to maintain and manage the apparatus. A problem is pointed out in that the price of the apparatus is expensive. A drawback is pointed out in that it is impossible to produce vinegared rice cakes so efficiently even when such an apparatus is used. Further, for example, the automatic boiled rice-shaping apparatus as described above requires careful washing operation after completion of daily work, revealing inconveniences that such an apparatus is extremely complicated, and a lot of labor and cost are required to maintain and manage the apparatus.

### SUMMARY OF THE INVENTION

A general object of the present invention is to provide a boiled rice-shaping apparatus in which neither sophisticated technique nor experience is required to lump and shape boiled rice, there is no difference in quality depending on a production operator, the installation space is decreased as small as possible, it is easy to maintain and manage the apparatus, and the price is low.

A principal object of the present invention is to provide a boiled rice-shaping apparatus in which boiled rice is charged in a chamber formed by a bottom section and first and second side plates provided in an upstanding manner with respect to the bottom section, the first and second side plates are displaced in direction to make approach to one another, and a lid member is allowed to make approach to the bottom section so that the boiled rice may be compressed.

Another object of the present invention is to provide a boiled rice-shaping apparatus in which the first and second side plates are formed by first and second rotatable plates respectively, and the first and second rotatable plates are rotated in directions to make approach to one another so that the boiled rice may be pressed and compressed in the widthwise direction.

Still another object of the present invention is to provide a boiled rice-shaping apparatus in which the second side plate is allowed to make approach to the first side plate by the aid of a slider so that the boiled rice may be pressed and compressed in the widthwise direction.

The above and other objects, features, and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 shows a perspective view illustrating a boiled rice-shaping apparatus according to an embodiment of the present invention;
FIG. 2 shows a plan view illustrating the boiled rice-shaping apparatus shown in FIG. 1;
FIG. 3 shows a sectional view taken along a line III-III illustrating the boiled rice-shaping apparatus shown in FIG. 2;
FIG. 4 shows a sectional view taken along a line IV-IV illustrating the boiled rice-shaping apparatus shown in FIG. 2;
FIG. 5 shows a sectional view taken along a line V-V illustrating the boiled rice-shaping apparatus shown in FIG. 2;
FIG. 6 shows a partial magnified exploded perspective view illustrating the boiled rice-shaping apparatus shown in FIG. 1;
FIG. 7 shows a partial magnified longitudinal sectional view illustrating the boiled rice-shaping apparatus shown in FIG. 1;
FIG. 8 shows a plan view illustrating a mold frame to be used for the boiled rice-shaping apparatus shown in FIG. 1;
FIG. 9 illustrate a method for using the boiled rice-shaping apparatus shown in FIG. 4, depicting a sectional view taken along a line V-V in a state in which boiled rice is pressed and compressed by a first rotatable plate and a second rotatable plate; and
FIG. 10 illustrate the method for using the boiled rice-shaping apparatus shown in FIG. 4, depicting a sectional view taken along the line V-V in a state in which the boiled rice is pressed and compressed by a lid member.

### DESCRIPTION OF THE PREFERRED EMBODIMENT

The boiled rice-shaping apparatus according to the present invention will be explained in detail below with reference to the accompanying drawings, as exemplified by preferred embodiment.

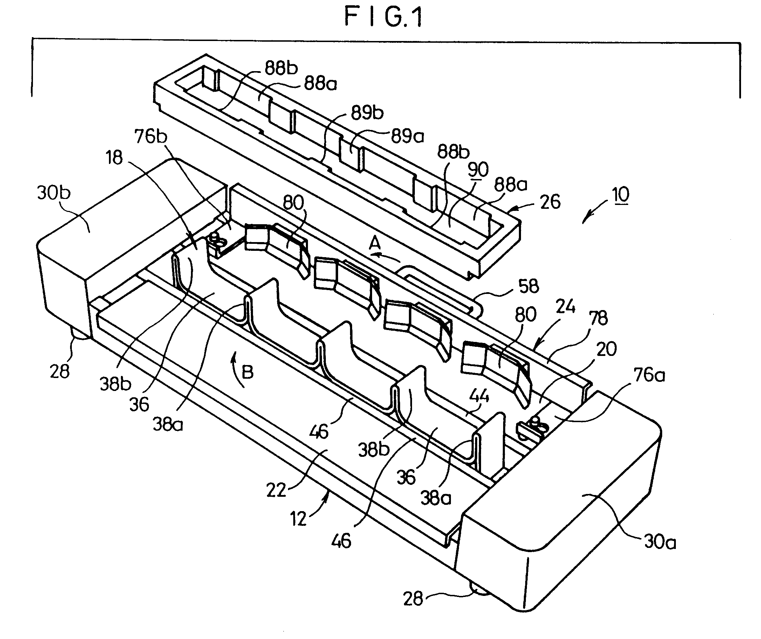

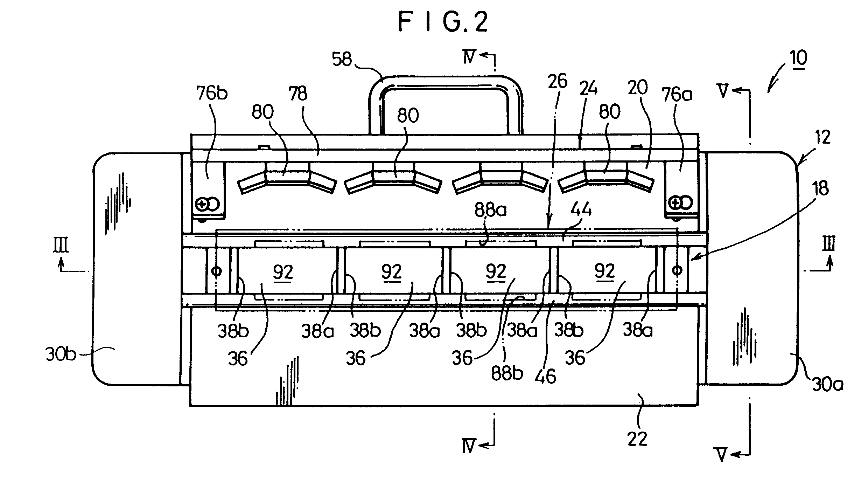

With reference to FIGS. 1 and 2, reference numeral 10 denotes a boiled rice-shaping apparatus according to an embodiment of the present invention. The boiled rice-shaping apparatus 10 comprises a base stand 12, a chamber-forming member 18 which is provided detachably with respect to the base stand 12, first and second rotatable plates 20, 22 which are provided on sides of the chamber-forming member 18 and which are rotatable in directions opposite to one another, a lid member support mechanism 24 which is provided on the first rotatable plate 20 and which is capable of making approach and separation with respect to the chamber-forming member 18, and a mold frame 26 which is detachable with respect to the chamber-forming member 18.

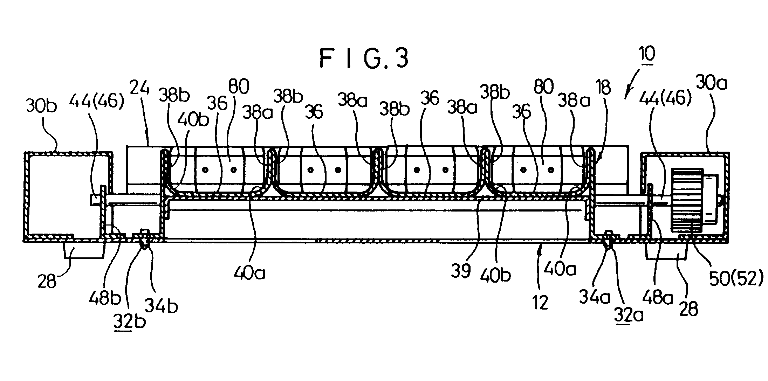

A plurality of leg members 28 are provided on a lower surface of the base stand 12. Expanded sections 30a, 30b each having a substantially rectangular configuration are formed at both ends in the longitudinal direction of the base stand 12. As shown in FIG. 3, holes 32a, 32b are defined through a bottom section of the base stand 12. Pin members 34a, 34b, which are secured to both ends of the chamber-forming member 18, are detachably inserted into the holes 32a, 32b. The chamber-forming member 18 is composed of a lengthy plate member formed to have a bent configuration. The chamber-forming member 18 has a plurality of bottom sections 36, and end surface sections 38a, 38b which are provided perpendicularly at ends of the respective bottom sections 36 while being separated from each other by predetermined spacing distances to form pairs. The respective bottom sections 36 are isolated from each other by the end surface sections 38a, 38b. The bottom section 36 and the end surface sections 38a, 38b are formed to be continuous with curved surface sections 40a, 40b intervening therebetween. A base plate 39 for supporting the bottom sections 36 is secured to the lower surface of the chamber-forming member 18.

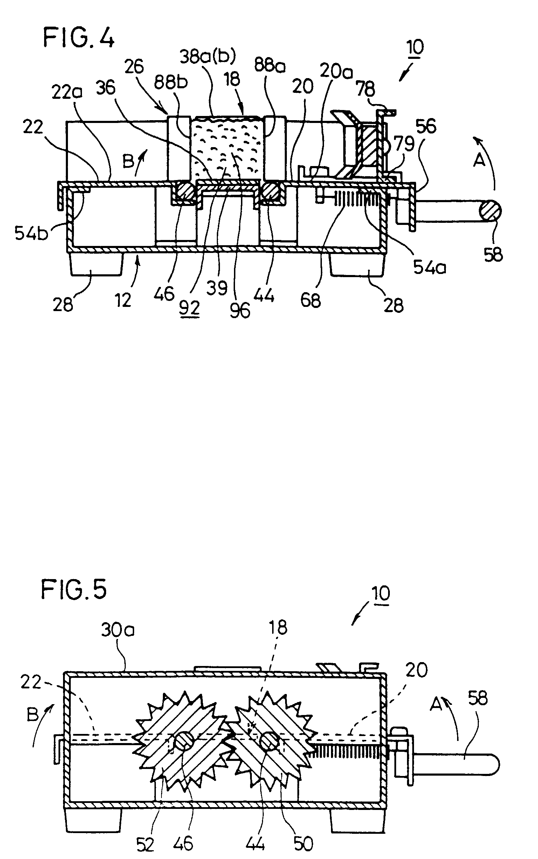

First and second shaft members 44, 46 are rotatably provided in a bridged manner between the expanded sections 30a, 30b to extend adjacently to the sides of the chamber-forming member 18 respectively. The first and second shaft members 44, 46 are rotatably supported by shaft support members 48a, 48b which are secured to the bottom section of the base stand 12 respectively. First and second gears 50, 52 are secured to first ends of the first and second shaft members 44, 46 respectively. The first and second gears 50, 52 are arranged in the first expanded section 30a. The first and second gears 50, 52 are meshed with each other. Accordingly, the first and second shaft members 44, 46 are rotated in directions opposite to one another (see FIG. 5).

A first rotatable plate 20 is secured to the first shaft member 44, while a second rotatable plate 22 is secured to the second shaft member 46. When the first and second rotatable plates 20, 22 abut against edges 54a, 54b of the base stand 12 in accordance with the rotating action of the first and second shaft members 44, 46, the bottom section 36 of the chamber-forming member 18 and the first and second rotatable plates 20, 22 are substantially flushed with each other, i.e., they form a flat surface (see FIG. 4). Upper surfaces of the first and second rotatable plates 20, 22 are formed to serve as pressing surfaces 20a, 22a respectively. The first rotatable plate 20 is formed with a bent section 56 which is disposed at an edge on a side opposite to the first shaft member 44. A handle 58 is secured to the bent section 56.

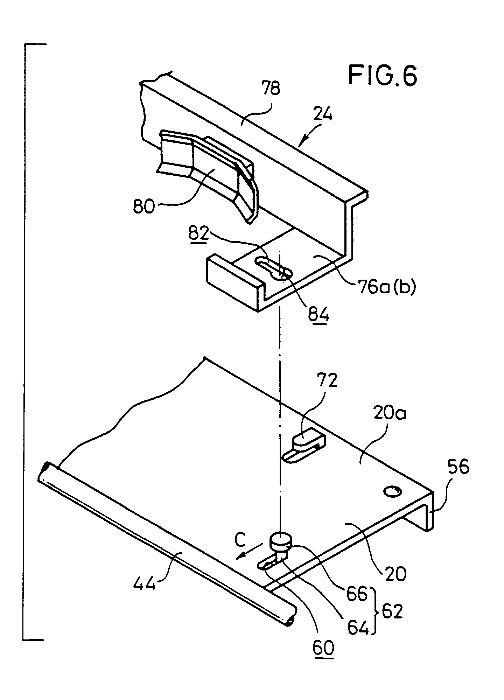

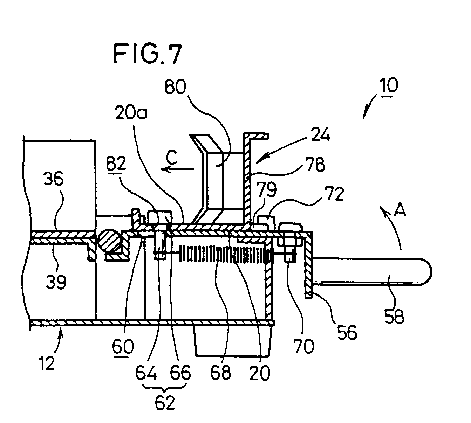

As shown in FIG. 6, a long hole 60 is defined in the vicinity of the end of the first rotatable plate 20. A pin member 62 is displaceably inserted into the long hole 60. The pin member 62 has a shaft 64. A head 66 is formed on an end of the shaft 64 protruding on the side of the pressing surface 20a. As shown in FIG. 7, one end of a coil spring 68 is hooked to the other end of the shaft 64. The other end of the coil spring 68 is hooked to a pin member 70 which is provided in the vicinity of the edge of the first rotatable plate 20. Accordingly, the pin member 62 is always energized in a direction to make approach to the pin member 70. A pawl 72, which protrudes upwardly from the pressing surface 20a, is formed on the first rotatable plate 20.

The lid member support mechanism 24 is detachably provided on the first rotatable plate 20 (see FIG. 1). The lid member support mechanism 24 comprises a lengthy support member 78 which is provided with bent sections 76a, 76b at both ends, and a plurality of lid members 80 (in the embodiment, 4 lid members) which are secured to the support member 78. The support member 78 has an edge 79. The lid member 80 has a part of deformed octagonal configuration, and it is formed to be concave at its central portion. The lid members 80 are arranged at equal spacing distances on the support member 78. As shown in FIG. 6, a long hole 82 is defined through each of the bent sections 76a, 76b. A diametrally expanded section 84 is formed on a side of one end of the long hole 82. The head 66 of the pin member 62, which is provided on the first rotatable plate 20, is insertable into the diametrally expanded section 84. The shaft 64 is displaceable along the long hole 82. Accordingly, the head 66 is inserted into the diametrally expanded section 84 of the bent section 76a, 76b, and the bent section 76a, 76b is displaced in the extending direction of the long hole 82. Thus, the shaft 64 is displaced in the long hole 82, and the head 66 is engaged with the opening of the long hole 82 so that the lid member support mechanism 24 is installed to the first rotatable plate 20. In this arrangement, the edge 79 of the support member 78 is engaged with the pawl 72. Thus, the support member 78 is positioned with respect to the first rotatable plate 20.

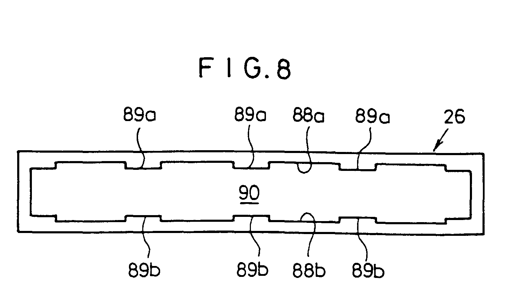

As shown in FIG. 8, the mold frame 26, which is detachable with respect to the chamber-forming member 18, is formed to have a lengthy configuration, with a mold hole 90 formed at its central portion. A pair of side surface sections 88a, 88b are formed on walls for forming the mold hole 90 so that they are disposed along the side portions of the bottom section 36 when the mold frame 26 is installed to the chamber-forming member 18. The spacing distance between the side surface sections 88a, 88b is formed to be slightly larger than the width of the bottom section 36. Projections 89a, 89b are formed on the side surface sections 88a, 88b so that they coincide with the width of the end surface sections 38a, 38b at positions corresponding to the end surface sections 38a, 38b of the chamber-forming member 18.

The boiled rice-shaping apparatus 10 according to the embodiment is basically constructed as described above. Next, explanation will be made for the operation of the boiled rice-shaping apparatus 10 as exemplified by a case in which vinegared rice cakes for shaped sushi are produced.

At first, the first and second rotatable plates 20, 22 are rotated to give a substantially flat state with respect to the bottom sections 36 of the chamber-forming member 18. When the mold frame 26 is installed to the chamber-forming member 18, a chamber 92 is formed by the bottom section 36, the end surface sections 38a, 38b, and the side surface sections 88a, 88b (see FIG. 4).

After completion of the preparatory step performed as described above, the chamber 92 is charged with vinegared rice 96 so that the chamber 92 is filled therewith in the widthwise direction and in the height direction. In this process, the capacity of the chamber 92 is constant. Therefore, the amount of the vinegared rice 96 changed in the chamber 92 is always constant. After that, the mold frame 26 is removed from the chamber-forming member 18.

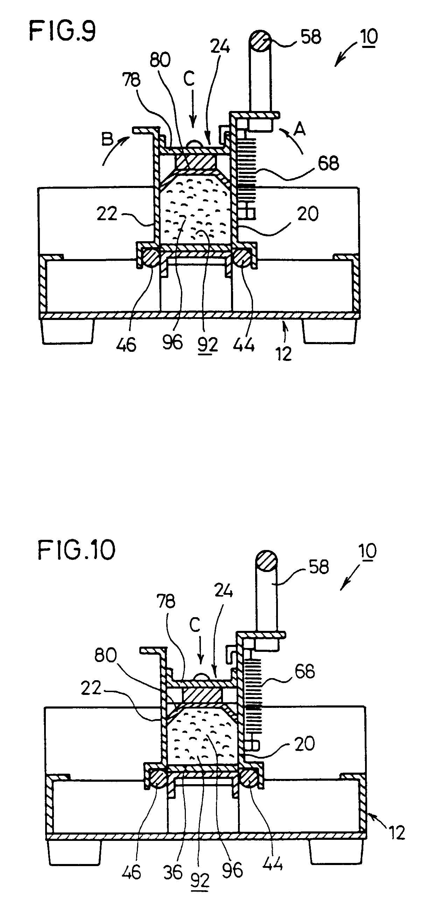

Subsequently, when the handle 58 is grasped to rotate the first rotatable plate 20 in a direction of the arrow A, then the second rotatable plate 22 is rotated in a direction of the arrow B by the aid of the first and second gears 50, 52, and the first and second rotatable plates make approach to one another. Accordingly, as shown in FIG. 9, the vinegared rice 96 charged in the chambers 92 is pressed and compressed in the widthwise direction by the first and second rotatable plates 20, 22.

After that, when the support member 78 of the lid member support mechanism 24 is pressed in a direction of the arrow C, then the pin members 62 slide on the walls for forming the long holes 60 together with the lid member support mechanism 24 in opposition to the tensile force of the coil springs 68, and the support member 78 is displaced in the direction of the arrow C (see FIGS. 6 and 7). Accordingly, as shown in FIG. 10, the lid members 80 approach the bottom sections 36, and the vinegared rice 96 is pressed and compressed in the vertical direction.

The vinegared rice 96 is pressed and compressed in the widthwise direction and in the vertical direction as described above. Therefore, the vinegared rice 96 is lumped and hardened in the chamber 92, and thus so-called vinegared rice cakes are formed.

Subsequently, the support member 78 is displaced in a direction to make separation from the bottom sections 36 in accordance with the energizing action of the coil springs 68. The handle 58 is grasped to rotate the first and second rotatable plates 20, 22 in directions to make separation from each other. The bottom sections 36 of the chamber-forming member 18 and the first and second rotatable plates 20, 22 are allowed to be at the positions at which they are substantially flat again. Thus, the shaped vinegared rice cakes are removed. The vinegared rice cakes are lumped and hardened to have an appropriate hardness. Therefore, the shape of the vinegared rice cake is not collapsed.

In the embodiment, the plurality of vinegared rice cakes are simultaneously obtained by using the chambers 92 formed as the plurality of individuals. Each of the vinegared rice cakes is formed by lumping and hardening the same amount of the vinegared rice 96 with the same force. Therefore, the vinegared rice cakes are formed to have an equivalent quality.

Japanese horseradish (wasabi) is optionally applied to the vinegared rice cake obtained as described above. A seafood topping such as a strip of tuna is placed thereon to complete the shaped sushi.

When the boiled rice-shaping apparatus 10 is washed, the pin members 34a, 34b of the chamber-forming member 18 are disengaged from the holes 32a, 32b of the base stand 12 to remove the chamber-forming member 18 from the base stand 12 (see FIG. 3). The lid member support mechanism 24 is removed from the first rotatable plate 20 (see FIGS. 6 and 7). In this process, the lid member support mechanism 24 is displaced along the long holes 82 so that the positions of the diametrally expanded sections 84 of the long holes 82 formed through the lid member support mechanism 24 are coincident with the heads 66 of the pin members 62 provided for the first rotatable plate 20. The heads 66 are removed from the diametrally expanded sections 84, and the support member 78 is removed from the pawls 72. Thus, the lid member support mechanism 24 can be removed from the first rotatable plate 20.

The boiled rice and the like adhered to the boiled rice-shaping apparatus 10 can be easily washed out by removing and washing the chamber-forming member 18 and the lid member support mechanism 24.

According to the boiled rice-shaping apparatus 10 according to the embodiment, neither sophisticated technique nor experience of the production operator is required to lump and shape boiled rice, the boiled rice can be easily lumped and hardened to have a predetermined size in a short period of time, and it is possible to obtain the boiled rice shaped to have the same quality as that obtained by human hands even when anyone performs the production. Further, the installation space is decreased as small as possible, it is easy to maintain and manage the apparatus, and it is possible to provide the apparatus at a low price. Furthermore, all of the mechanism is manually operated, and hence it is unnecessary to use any power source such as electricity. Therefore, the apparatus is safe, because there is no fear of accident due to electric leakage or the like when the apparatus is used in a kitchen in which water is used.

The apparatus has the simple structure. Therefore, any failure or disorder scarcely occurs, and it is possible to wash the entire apparatus easily and conveniently.

A plurality of shaped boiled rice cakes can be obtained by means of one time of operation. Therefore, the production efficiency is improved.

The embodiment is illustrative of the case in which the shaped sushi is produced. However, the present invention is not limited to the embodiment. It is a matter of course that the present invention is applicable to those produced by lumping and hardening boiled rice to have a predetermined shape, including, for example, rice balls such as onigiri.

## Claims

1. A boiled rice-shaping apparatus (10) comprising:
a bottom section (36);
a first rotatable plate (20) which is provided in an upstanding manner on said bottom section (36);
a second rotatable plate (22) which is provided in an upstanding manner on said bottom section (36) and which is capable of making relative approach and separation with respect to said first rotatable plate (20); and
a lid member (80) which is capable of making approach and separation with respect to said bottom section (36) in a direction perpendicular to relative displacement directions of said first rotatable plate (20) and said second rotatable plate (22), wherein:
boiled rice (96) is charged in a chamber (92) which is formed by said bottom section (36), said first rotatable plate (20), and said second rotatable plate (22), said first ratatable plate (20) and said second ratatable plate (22) are allowed to make approach to one another to press and compress said boiled rice (96) in a widthwise direction, and said lid member (80) is allowed to make approach to said bottom section (36) to press and compress said boiled rice (96) in a vertical direction so that said boiled rice (96) having been shaped to have a predetermined shape is obtained.

2. The boiled rice-shaping apparatus (10) according to claim 1, wherein said first rotatable plate (20) and said second rotatable plate (22) are adjacent to side portions of said bottom section (36) and have shaft sections (44, 46) disposed in parallel to one another respectively, and said first rotatable plate (20) and said second rotatable plate (22) are rotated in directions to make approach to one another so that said boiled rice (96) is pressed and compressed in said widthwise direction.

3. The boiled rice-shaping apparatus (10) according to claim 2, wherein said respective shaft sections (44, 46) of said first rotatable plate (20) and said second rotatable plate (22) are provided with gears (50, 52) which are meshed with each other.

4. The boiled rice-shaping apparatus (10) according to claim 2, wherein said lid member (80) is provided on any one of said first rotatable plate (20) and said second rotatable plate (22), and said lid member (80) is displaceable along said first rotatable plate (20) or said second rotatable plate (22).

5. The boiled rice-shaping apparatus (10) according to claim 1, wherein a pair of end surface sections (38a, 38b), which extend in a direction substantially perpendicular to said first rotatable plate (20) and said second rotatable plate (22) and which are separated from each other by a predetermined spacing distance, are provided in an upstanding manner on said bottom section (36), and said chamber (92) for charging said boiled rice (96) therein is formed by said bottom section (36), said first rotatable plate (20), said second rotatable plate (22), and said pair of end surface sections (38a, 38b).

6. The boiled rice-shaping apparatus (10) according to claim 5, wherein a mold frame (26), which has a pair of side surface sections (88a, 88b) formed along side portions of said bottom section (36), is detachably provided on said bottom section (36), and said boiled rice (96) is charged in said chamber (92) which is formed by said bottom section (36), said pair of end surface sections (38a, 38b), and said pair of side surface sections (88a, 88b).

7. The boiled rice-shaping apparatus (10) according to claim 5, wherein said bottom section (36) is provided as a plurality of individuals, each of said plurality of bottom sections (36) is arranged while being isolated from each other by said end surface sections (38a, 38b), and said lid member (80) is provided as a plurality of individuals corresponding to said bottom sections (36) respectively.
